# EUROPÄISCHE PATENTANMELDUNG

(11) **EP 2 141 292 A2**
(43) Veröffentlichungstag der Anmeldung: **06.01.2010**
(21) Anmeldenummer: 09008450.0
(22) Anmeldetag: 29.06.2009
(51) Int. Cl.: E03B 3/02, E03F 5/10

(54) **Montagesatz, insbesondere für einen Regenwasserspeicher und mit dem Montagesatz hergestelltes Regenwasser-Speichersystem**

(30) Priorität: 30.06.2008 DE 102008030280
(71) Anmelder: Goerke, Ulla, 30900 Wedemark (DE); Goerke, Manuel, 30900 Wedemark (DE)
(72) Erfinder: Goerke, Manuel, 30900 Wedemark (DE)
(74) Vertreter: Seewald, Jürgen

(57) **Zusammenfassung**

Die Erfindung betrifft einen Montagesatz, der zum Einsatz in einem Revisionsschacht (5) vorgesehen ist und aufweist:
einen Ventilkörper (11) zum dichtenden Anschluss an einen Zu- oder Ablauf (9) des Revisionsschachtes (5),
einen Schwimmer (17), dessen Höhenposition in dem Revisionsschacht (5) von der Füllhöhe des Revisionsschachtes (5) abhängt,
eine schwenkbar aufgenommene Verschlusseinrichtung (14) mit einem Ventilelement (12) zur Anlage an einem Ventilsitz (48) des Ventilkörpers zum Verschließen des Zu- oder Ablaufs (9) in einer Schließstellung und Freigeben in einer Offenstellung,

wobei das Eigengewicht der Verschlusseinrichtung (14) und der Wasserdruck des in dem Revisionsschacht aufgenommenen Wassers (50) das Ventilelement (12) gegen den Ventilsitz (48) drücken,
wobei die Verschlusseinrichtung (14) mit dem Schwimmer (17) gekoppelt ist und ergänzend manuell zwischen der Schließstellung und der Offenstellung verstellbar ist.

Der Montagesatz kann zur Ausbildung eines Regenwasserspeichers in dem Revisionsschacht oder auch als Rückstausystem gegen das Eindringen von Schmutzwasser eingesetzt werden.

## Beschreibung

Die Erfindung betrifft einen Montagesatz, der insbesondere für einen Regenwasserspeicher einsetzbar ist, und ein mit diesem hergestelltes Regenwasser-Speichersystem, sowie ein Verfahren zu dessen Herstellung.

Zur Speicherung von Regenwasser auf dem Grundstück eines Benutzers sind verschiedene Systeme bekannt Zum einen kann das z. B. auf dem Hausdach aufgefangene und über ein Fallrohr abgeleitete Regenwasser in einem überirdisch stehenden Speichergefäß aufgefangen werden; ein derartiges Speichergefäß blockiert jedoch Stellraum auf dem Grundstück und ist der Witterung, insbesondere auch Frost ausgesetzt. Weiterhin sind Speichersysteme mit unterirdischen Zisternen bekannt, in die das Regenwasser eingeleitet wird. Zur Ausbildung einer derartigen Zisterne muss somit zunächst im Grundstück ein entsprechendes Loch gegraben und die Zisterne fachmännisch verlegt und angeschlossen werden, was zu einem erheblichen Zeit- und Kostenaufwand führt. Weiterhin ist für einen fachgerechten Ablauf zu sorgen, damit bei einer Überfüllung kein unkontrolliertes Austreten des Wassers erfolgt. Weitere Probleme sind mögliche Verstopfungen durch mit dem Regenwasser aufgenommene Substanzen.

Das in derartigen Regenwasserspeichern gesammelte Wasser kann von dem Benutzer nachfolgend z. B. zur Bewässerung eines Grundstücks eingesetzt werden.

Der Erfindung liegt die Aufgabe zur Grunde, einen Montagesatz zu schaffen, der bei einer hohen Flexibilität zur Ausbildung insbesondere eines Regenwasserspeichers einsetzbar ist, sowie weiterhin auch ein hiermit hergestelltes Regenwasser-Speichersystem zu schaffen. Hierbei soll die Ausbildung eines Regenwasserspeichers auf dem Grundstück eines Benutzers mit relativ geringem Zeit-, Kosten- und Materialaufwand ermöglicht werden.

Diese Aufgabe wird durch ein Montagesatz nach Anspruch 1 und ein Regenwasserspeichersystem mit einem derartigen Montagesatz gelöst. Die Unteransprüche beschreiben bevorzugte Weiterbildungen. Hierbei ist weiterhin auch ein Einsatz des erfindungsgemäßen Montagesatzes als Rückstausystem zur Sicherung einer Hausentwässerung vorgesehen.

Der Erfindung liegt die Erkenntnis zu Grunde, dass auf Grundstücken vor dem Anschluss an ein öffentliches Regenwasser-Kanalsystem immer bzw. weitgehend ein Regenwasser-Revisionsschacht vorgesehen ist, der einen Zugang zu dem öffentlichen Regenwasser-Kanalsystem ermöglicht. Der Revisionsschacht ermöglicht hierbei in der Regel den Einstieg eines Benutzers bis auf die Verlegetiefe, in der die Regenwasserleitung des Grundstücks an das Regenwasser-Ablaufrohr zum öffentlichen Kanalnetz angeschlossen ist.

Der Erfindung liegt der Gedanke zu Grunde, diesen bereits vorhandenen Revisionsschacht zur Ausbildung eines Regenwasserspeichers zu nutzen. Hierzu wird das in den Regenwasser-Revisionsschacht mündende Regenwasserrohr nicht direkt an das Regenwasserablaufrohr zum öffentlichen Kanalnetz angeschlossen, sondern verbleibt mit seinem Eingang in dem unteren Bereich des Revisionsschachtes, so dass der Revisionsschacht selbst als Speicher bzw. Speicher-Zisterne dienen kann. In bzw. an den Regenwasserablauf des Revisionsschachtes wird ein Ventilkörper bzw. ein Anschlussrohr angebracht, das durch ein verstellbares Ventilelement verschließbar ist, wobei das Ventilelement zum einen selbsttätig bei Erreichen einer bestimmten Füllhöhe und zum anderen auch manuell durch den Benutzer in seine Offenstellung bzw. Ablassstellung verstellt werden kann.

Die Füllhöhe kann hierbei mit geringem Aufwand und sicher durch einen Schwimmer festgestellt werden, der das Ventilelement über einen Ventilhebelarm zwischen seinen Stellungen verstellt. Hierzu kann insbesondere ein Zugmittel, z.B. ein Seil, eine Kette oder eine Stange, zwischen dem Schwimmer und dem Ventilhebelarm vorgesehen sein, so dass der Schwimmer bei Überschreiten der maximal gewollten Füllhöhe über das Zugmittel und den Ventilhebelarm das Ventilelement verstellt.

Somit wird der Innenraum des Regenwasser-Revisionsschachtes durch das einlaufende Regenwasser gefüllt, bis der Schwimmer den Regenwasserablauf öffnet; somit besteht keine Überlaufgefahr.

Erfindungsgemäß wird somit ein Montagesatz zur Verfügung gestellt, mit dem ein Benutzer - grundsätzlich auch ohne große Fachkenntnisse - einen bereits vorhandenen Regenwasser-Revisionsschacht zu einem Regenwasserspeicher weiterbilden kann.

Der Montagesatz zur Ausbildung eines Regenwasserspeichers umfasst einen in den Regenwasserablauf einzusetzenden Ventilkörper, der insbesondere als Anschlussrohr ausgebildet sein kann, vorzugsweise mit einer geeigneten Dichtung, sowie eine Verschlusseinrichtung mit einem zwischen einer Offenstellung und einer Schließstellung verstellbaren Ventilelement, das in der Schließstellung zur Anlage an einen Ventilsitz des Ventilkörpers gelangt. Das Ventilelement wird über einen Ventilhebelarm und einen Schwimmer selbsttätig bei Erreichen bzw. Überschreiten einer vom Benutzer einstellbaren Füllhöhe geöffnet. Die Füllhöhe bzw. Speicherpegel oder Speichermenge ist über die Länge des Zugmittels, insbesondere des Zugseils, zwischen dem Schwimmer und dem Ventilhebelarm variabel einstellbar.

Der Benutzer kann den Ventilhebelarm hierbei auch manuell betätigen, vorzugsweise durch Ergreifen des Schwimmers oder Zugmittels. Durch den Druck der Wassersäule entsteht ein Anpressdruck von der Kugel oder Scheibe zur Dichtung. Dieser steigt mit höhe der Wassersäule an. Der Anfangsschließdruck entsteht durch das Eigengewicht der Verschlusseinrichtung.

Durch Öffnen des Ventilkörpers können auch eventuelle Ablagerungen mit dem austretenden Wasser weggeschwemmt werden, d.h. es ist eine selbstreinigende Wirkung des Ventils erreichbar.

Da bestehende Regenwasser-Revisionsschächte im Allgemeinen aus wasserdichtem Beton gefertigt sind, kann erfindungsgemäß eine zusätzliche Abdichtung weitgehend entfallen. Dem erfindungsgemäßen Montagesatz können z. B. Dichtmittel zum Abdichten der Schachtringfugen für einen herkömmlichen aus aufeinander gesetzten Schachtringen bestehenden BetonSchacht beigefügt werden. Hierzu kann ergänzend etwas Grundierfarbe oder Grundierlack, gegebenenfalls mit einem Auftragmittel, z. B. einem Pinsel, beigefügt sein, so dass der Benutzer lediglich zunächst den Bereich der Schachtringfugen entsprechend zu streichen bzw. zu grundieren hat und nachfolgend direkt die Befestigungsmittel, z. B. Dichtbänder, aufbringen kann.

Neben der Verwendung des Montagesatzes in einem Betonschacht sind weiterhin Verwendungen in anderen Auffangbehältern möglich. Bei ganz oder teilweise wasserdurchlässigen Behältern (z.B. Betonschacht) ist vorteilhafterweise ein Dichtungssatz im Montagesatz enthalten. Dieser besteht entweder aus einem selbstklebenden Dichtungsband oder aus einer spachtelfähigen dauerelastischen Masse, die zusätzlich mit einer Sperrfolie belegt ist. Bei beiden Varianten wird vorteilhafter Weise zuvor eine Grundierung aus einer lösungsmittelfreien (nicht gesundheitsschädlich, nicht entzündbar) Bitumenemulsion in Fugen - bzw. Klebebereich angebracht.

Erfindungsgemäß wird durch die - vorzugsweise große - Hebeluntersetzung eine dynamische Regelung des Wasserpegels über Schwimmer oder elektromechanisch gesteuert und erreicht.

Die Dichtung zum Auslaufrohr kann eine Ein - oder Mehrfach- Lamellendichtung oder ein Verpressschlauchdichtring (wird mit einem flüssigen aushärtendem Material befüllt) oder auch ein durch mechanische Verformung gestauchter Dichtring sein.

Zu Revisionszwecken und Inspektionen der Kanalrohre kann die Verschlusseinrichtung, d.h. Ventilelement mit Ventilhebelarm, vorteilhafterweise direkt hochgeklappt werden, so dass ein Zugang ohne komplexere Demontagen möglich ist.

Indem das Ventilelement, z. B. eine Ventilkugel oder Ventil-Halbkugel oder Ventilkegel, mit einem größeren Durchmesser als der Ventilkörper bzw. das Anschlussrohr ausgebildet ist, kann einerseits ein sicherer Anpressvorgang erreicht werden durch den Wasserdruck, und weiterhin auch ein Hineindrücken des Ventilelementes in den Ventilkörper verhindert werden.

Zusätzlich zum Wasserdruck kann auch das Eigengewicht der Verschlusseinrichtung zur Ausbildung einer Anpresskraft beitragen, indem z. B. ein Gelenk der Verschlusseinrichtung oberhalb des Ventilsitzes angeordnet ist. Hierbei kann das Ventilelement über ein Verbindungsmittel, z. B. eine in das Ventilelement eingesetzte Schraube, in dem Gelenk aufgenommen sein.

Der Ventilkörper kann direkt über eine Dichtungseinrichtung, z.B. eine Verpressdichtung oder Mehrlippendichtung, in das Zu- oder Ablaufrohr einsetzbar sein.

Als Dichtungseinrichtung ist dann gemäß einer ersten Ausbildung eine Gummi-Pressdichtung mit einem um das Anschlussrohr gesetzten, ringförmigen Gummikörper und den Gummikörper in axialer Richtung umgebenden Pressringen zum axialen Verpressen des Gummikörpers unter Ausbildung einer radialer Anpresswirkung möglich. Hierbei können durch die Pressringe und den Gummikörper Spannschrauben zur Betätigung vom Innenraum des Regenwasser-Revisionsschachtes her geführt sein, wobei vorzugsweise einer der Pressringe Gewinde zur Aufnahme der Spannschrauben und somit zu seiner axialen Verstellung bei Drehung der Spannschrauben aufweist. Weiterhin kann um das Anschlussrohr weiterhin ein Führungsring zur Führung eines Endes der Spannschrauben mit ihrem Schraubenkopf gelegt sein.

Gemäß einer hierzu alternativen Ausbildung ist die Dichtungseinrichtung als um das Anschlussrohr gesetzte, ringförmige Radialdichtung, vorzugsweise Lamellendichtung, mit radial vorstehenden Dichtelementen, vorzugsweise Dichtlamellen, ausgebildet.

Gemäß einem weiteren Aspekt der Erfindung kann der Montagesatz auch zur Ausbildung eines Rückstausystems verwendet werden, das eine Hausentwässerung gegen das Eindringen von Schmutzwasser aus öffentlichen Kanälen schützt. Erfindungsgemäß wird erkannt, dass der gleiche Montagesatz bzw. ein entsprechend erweiterter Montagesatz auch für diesen Einsatzzweck geeignet ist. Hierbei kann der Ventilkörper als Anschlussrohr in den Wasserzulauf eingesetzt werden und diesen bei Eindringen von Schmutzwasser aus dem öffentlichen Kanalnetz verschließen. Zur Feststellung, ob Schmutzwasser eindringt, kann vorzugsweise ein Schwimmer vorgesehen sein, der durch das eindringende Schmutzwasser angehoben wird und über ein Kopplungssystem, z. B. aus Seil und Rollen, das Verschlusssystem auslösen.

Erfindungsgemäß kann an dem Innenrohr ein Anschlag zur Begrenzung der Einsetzlänge des Anschlussrohrs in das Zulaufrohr oder Ablaufrohr ausgebildet sein.

Weiterhin kann der Montagesatz Dichtmittel zum Abdichten von Schachtringfugen zwischen einzelnen Schachtringen des Revisionsschachtes aufweisen, z. B. Grundierlack und/oder Dichtungsbänder.

Weiterhin kann am Behälter- oder Schachtboden ein Anbindungselement zur Vermeidung eines Hereindrückens des Ventilelementes in das Zulaufrohr oder Ablaufrohr und zur Ausbildung eines Gegendrucks für den Auftrieb des Schwimmers vorgesehen sein.

Somit wird erfindungsgemäß ein Montagesatz zum Einsatz in einen Revisionsschacht geschaffen, der zum einen zur Ausbildung eines Regenwasserspeichers und vorteilhafterweise weiterhin auch zur Ausbildung eines Rückstausystems verwendbar ist. Auch diese vielseitige Verwendbarkeit bei geringen Herstellkosten, insbesondere bei Großserienfertigung verschiedener Systeme, stellt einen weiteren erfindungsgemäßen Vorteil dar.

Die Erfindung wird im Folgenden anhand der beiliegenden Zeichnungen an einigen Ausführungsformen näher erläutert. Es zeigen:
- Fig. 1: eine Darstellung der Gesamtanordnung aus einem Haus mit einem erfindungsgemäßen Regenwasserspeicher;
- Fig. 2: einen Querschnitt durch einen erfindungsgemäßen Montagesatz bei Einsatz in einen Revisionsschacht;
- Fig. 3: einen Querschnitt durch den Montagesatz;

- Fig. 4: einen Querschnitt durch den Anbindungsbereich des Anschlussrohrs gemäß einer Ausführungsform;:
- Fig. 5: eine Vorderansicht des Gummikörpers oder inneren Pressrings aus Figur 4;
- Fig. 6: ein Lamellen-Dichtungssystem als weitere Ausführungsform;
- Fig. 7: eine gegenüber Fig. 2 erweiterte Ausführungsform, bei der ergänzend eine Rückschlagklappe im Auslass vorgesehen ist;
- Fig. 8: eine weitere Ausführungsform mit Einsatz eines erfindungsgemäßen Montagesatzes als Rückstausystem.

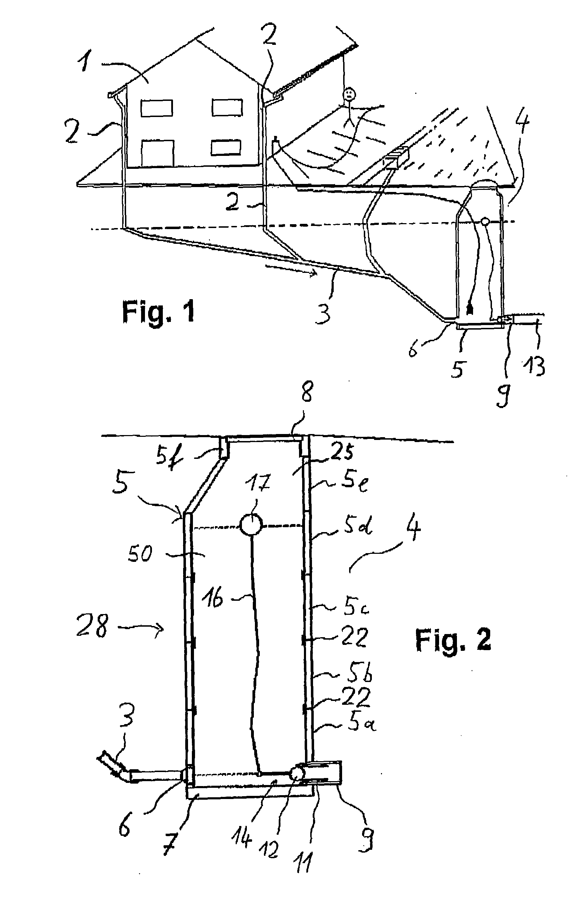

Gemäß Figur 1 sind an einem Haus 1 ein oder mehrere Regenwasser-Fallrohre 2 vorgesehen; ergänzend können z. B. auch im Boden an einem Gulli oder Regenabfluss Regenwasser-Fallrohre 2 vorgesehen sein. Die Regenwasser-Fallrohre 2 führen zu einem Regenwasserrohr 3, das im Erdreich 4 zu einem Regenwasser-Revisionsschacht 5 verläuft. Das Regenwasserrohr 3 ist hierbei in an sich bekannter Weise an einen Regenwasserzulauf 6 des Regenwasser-Revisionsschachtes 5 angeschlossen.

Der Regenwasser-Revisionsschacht 5 weist in an sich bekannter Weise mehrere, übereinander gesetzte Schachtringe 5 a, b, c, d, e, f aus Beton, insbesondere einem wasserdichten Beton, auf. Der unterste Schachtring 5a weist einen Boden 7 und einen sich an den Boden 7 nach oben anschließenden rohrförmigen Bereich auf; die nach oben folgenden Schachtringe 5b, 5c, 5d sind jeweils rohrförmig ausgebildet und können grundsätzlich identisch sein; der anschließende Schachtring 5e verjüngt sich konisch oder unsymmetrisch nach oben; der anschließende Schachtring 5f ist z. B, ringförmig mit kleinerem Durchmesser ausgebildet und nimmt einen Schachtdeckel 8 auf, der auf einem Niveau mit dem Erdreich 4 liegt. An dem untersten Schachtring 5a ist ein Regenwasserablaufrohr 9 angebracht, das zum öffentlichen Regenwasser-Kanalnetz 13 führt.

Erfindungsgemäß ist der Regenwasser-Revisionsschacht 5 als Regenwasserspeicher 28 bzw. Regenwasserzisteme ausgebildet. Hierzu ist ein erfindungsgemäßer Montagesatz 10 vorgesehen, der ein als Ventilkörper dienendes Anschlussrohr 11 zum dichtenden Anschluss an das Regenwasserablaufrohr 9 des Regenwasser- Revisionsschachtes 5, und eine schwenkbare Verschlusseinrichtung 14 aufweist. Die Verschlusseinrichtung 14 weist hierbei eine Ventilkugel 12 und einen Ventilhebelarm 13 auf und ist in einem Gelenk 20 an einer Anbindungskonsole 26 angelenkt, die auf dem Boden 7 mittels eines Befestigungsmittels, z. B. einer Schraube 47, befestigt ist. Hierbei kann die Anbindungskonsole 26 mit dem Anschlussrohr 11 verbunden sein, sodass die Befestigung der Anbindungskonsole 26 am Boden 7 auch das Anschlussrohr 11 befestigt.

Am äußeren Ende des Anschlussrohrs 11 ist ein Ventilsitz 48 ausgebildet, gegen den die als Ventilelement dienende Ventilkugel 12 gedrückt wird. Das Gelenk 20 ist hierbei oberhalb des Ventilsitzes 48 und der Ventilkugel 12 angeordnet, so dass die Ventilkugel 12 durch das Gewicht der Verschlusseinrichtung 14 gegen den Ventilsitz 48 gedrückt wird. Das Gelenk 20 kann z. B. zwischen zwei Bolzen, insbesondere Schrauben 20a, 20b gebildet sein, die gelenkig ineinander greifen. Hierbei kann z. B. die Schraube 20a in die Ventilkugel 12 und die Schraube 20b in die Anbindungskonsole 26 geschraubt sein, z. B. als Gewindeschrauben 20 a, b oder auch selbstschneidende Schrauben 20 a, b.

Ein Schwimmer 17 ist über ein Seil 16 (oder Kette oder Zugstange) am Ende des Ventilhebelarms 13 angebunden und schwimmt auf dem im Innenraum 25 des Regenwasser- Revisionsschachtes 5 gespeicherten Wasser 50. Seine vertikale Höhenposition entspricht somit der Füllhöhe des Regenwasser- Revisionsschachtes 5. Bei Erreichen einer maximalen Füllhöhe wird das Seil 16 gespannt; bei Überschreiten der maximalen Füllhöhe zieht der Schwimmer 17 über das Seil 16 den Ventilhebelarm 13, sodass die Ventilkugel 12 von dem Ventilsitz 48 abhebt. Somit erfolgt eine selbsttätige Regelung der Füllhöhe. Bei entlastetem Seil 16 drücken das Eigengewicht der Verschlusseinrichtung 14 und die Wassersäule des Wassers 50 die Ventilkugel 12 gegen den Ventilsitz 48.

Der Benutzer kann den Schwimmer 17 von oben ergreifen, um den Ventilhebelarm 13 manuell zu ziehen und somit das Wasser 50 abzulassen.

Vorteilhafterweise gehören Dichtmittel zum Abdichten der zwischen den Schachtringen 5a bis 5d gebildeten Schachtringfugen 22 zum erfindungsgemäßen Montagesatz 10. Als Dichtmittel können z. B. Dichtungsbänder 24 von innen auf die Schachtringfugen 22 geklebt werden. Vorteilhafterweise werden die Schachtringe 5a bis 5d im Bereich ihrer Schachtringfugen 22 vom Benutzer zunächst mit Grundierungsfarbe 23 bestrichen bzw. lackiert, um einen besseren Halt der aufgelegten Dichtungsbänder 24 zu ermöglichen. Diese Abdichtung erfolgt unterhalb der durch die Seillänge (oder Länge der Zugstange) festgelegten, gestrichelt eingezeichneten maximalen Füllhöhe.

Vom Regenwasserzulauf 6 her fließt somit Regenwasser in den Innenraum 25 des Regenwasser-Revisionsschachts 5. Da das Regenwasserablaufrohr 9 zunächst versperrt ist, steigt das einfließende Regenwasser im Innenraum 25 bis zur maximalen Füllhöhe. Da die Schachtringfugen 22 von innen abgedichtet sind, wird somit ein Regenwasserspeicher 28 bzw. eine Regenwasserzisteme gebildet.

Für einen Zugang eines Benutzers zum Regenwasserablauf 9 muss lediglich das Wasser 50 abgelassen werden. Hierzu kann ein Benutzer den Schwimmer 17 ergreifen und das Seil 16 (bzw. die Zugstange) ziehen.

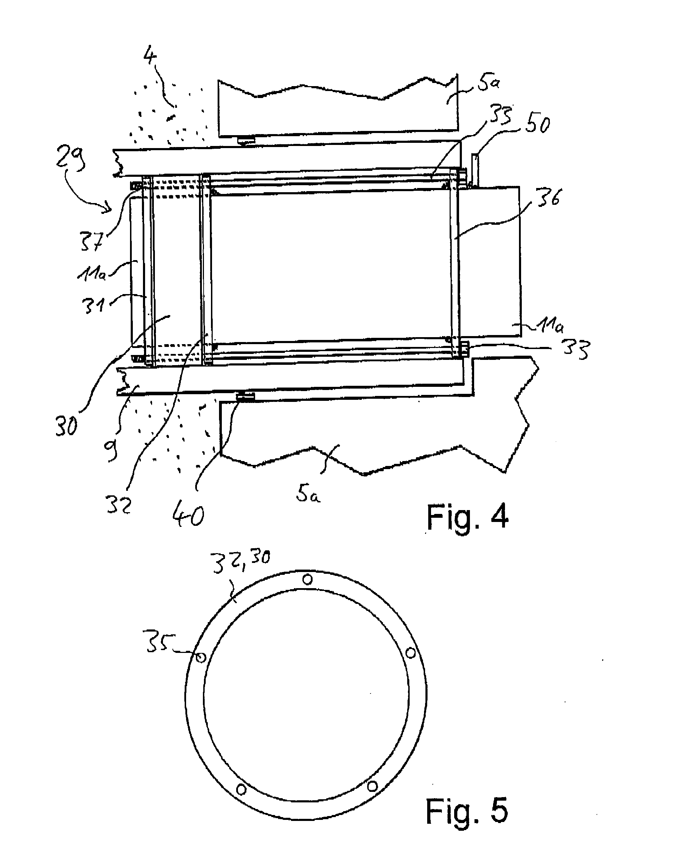

Die Anbindung des horizontalen Anschlussrohres 11 an das Regenwasserablaufrohr 9 kann gemäß der Ausführungsform der Figur 4 über einen Dichtungseinsatz erfolgen, bei dem das Anschlussrohr 11, z. B. sein Rohrabschnitt 11a, als Innenrohr in das Regenwasserablaufrohr 9 gesetzt wird, wobei zwischen den Rohrabschnitt 11a und das Regenwasserablaufrohr 9 eine Gummi-Pressdichtung 29 gesetzt ist. Die Gummi-Pressdichtung 29 weist einen ringförmigen Gummikörper 30 auf, der um den Rohrabschnitt 11a gelegt ist, wobei an den beiden axialen Endflächen des Gummikörpers 30 Pressringe 31, 32 anliegen, von denen z. B. der rechte Pressring 32 am Rohrabschnitt 11a befestigt, z. B. verklebt oder verschweißt ist. Spannschrauben 33 verlaufen außerhalb des Rohrabschnitt s11a und parallel zu diesem durch in Figur 5 gezeigte Bohrungen 35 von z. B. 6,2 mm Durchmesser oder 6 mm Durchmesser des rechten, inneren Pressrings 32 und des Gummikörpers 30 und sind jeweils in ein Innengewinde 37 des linken, äußeren Pressrings 33 eingeschraubt. Die Spannschrauben 33 erstrecken sich hierbei in der Axialrichtung bis zum Ende des Regenwasserablaufrohrs 9, so dass ihre Köpfe entsprechend mit einem Werkzeug vom Innenraum 25 her erfasst werden können. Vorteilhafterweise sind die Spannschrauben 33 in diesem Bereich durch einen weiteren Führungsring 36 geführt. Durch Drehen der Spannschrauben 33 kann somit die Gummi-Pressdichtung 30 zwischen den Pressringen 31, 32 verpresst werden, so dass sie sich axial nach außen wölbt und zwischen dem Rohrabschnitt 11a und der Innenseite des Regenwasserablaufs 9 dichtend verpresst.

Der Außendurchmesser der Pressringe 31, 32 kann bei z. B. 143 bis 146 mm liegen, mit z. B. 8 mm Dicke, z. B. aus Stahl. Der Gummikörper 30 kann z. B. 148 mm Außen-Durchmesser und fünf Bohrungen 35 von z. B. jeweils 6 mm Durchmesser aufweisen. Der Führungsring 36 kann z. B. entsprechend dem Pressring 32 ausgebildet sein. Die Innengewinde 37 sind entsprechend M6.

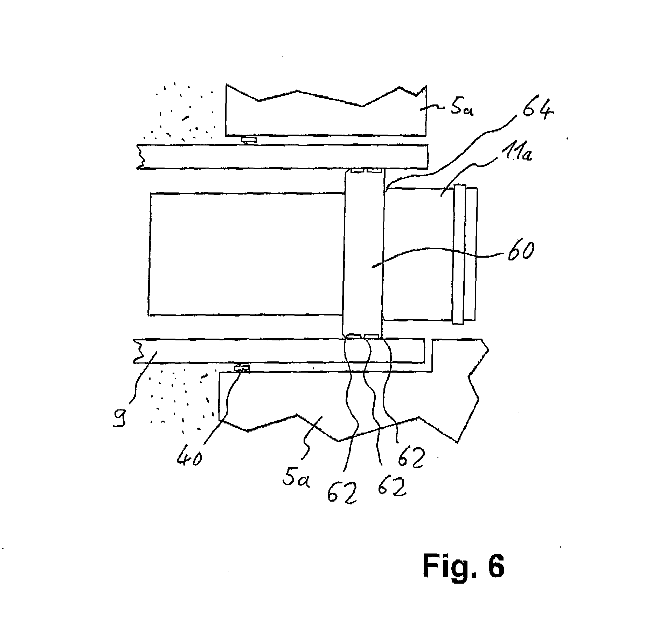

Alternativ zu der Gummipressdichfiung 29 der Figur 4, 5 können auch andere Dichtungen, z. B. Einsteck-Dichtungen mit einem ringförmigen Dichtungsgummi zur axialen Aufnahme des Anschlussrohres 11 vorgesehen sein. Fig. 6 zeigt eine weitere Ausführungsform, bei der anstelle der Gummi-Pressdichtung 30 eine Lamellendichtung 60 vorgesehen ist. Die Lamellendichtung 60 ist radial zwischen dem Rohrabschnitt 11 a und der lnnenfläche des Regenwasserablaufrohrs 9 angebracht und dichtet nach außen über radial vorstehende Lamellen 62, die zur Erhöhung der Dichtwirkung vorzugsweise gegenüber dem Innendurchmesser des Regenwasserablaufrohrs 9 ein gewisses Übermaß aufweisen können. An dem Rohrabschnitt 11a kann hierbei eine Schulter 64 bzw. Querschnittsverengung ausgebildet sein, um den Sitz der Lamellendichtung 60 in axialer Richtung zu verbessern und ein Abrutschen beim Einführen des Rohrabschnitts 11 a in das Regenwasserablaufrohr 9 zu vermeiden; alternativ hierzu kann die Lamellendichtung 60 aber z. B. auch durch zwei in Umfangsrichtung umlaufende Ringe axial fixiert werden.

An dem Anschlussrohr 11 kann bei allen Ausführungsformen vorzugsweise ein Anschlag 50 zur Begrenzung der Einsetzlänge in das Regenwasserablaufrohr 9 ausgebildet sein.

Hierbei sind herkömmlicherweise bereits zwischen der Revisionsschachtwandung des unteren Schachtrings 5a und dem Regenwasserablauf 9 Dichtungsringe 40 vorgesehen, die erfindungsgemäß somit nicht verändert zu werden brauchen. Der Anschluss des Anschlussrohres 11 kann erfindungsgemäß ohne eine bauliche oder konstruktive Veränderung des vorhandenen Regenwasser- Revisionsschachtes 5 erfolgen.

Somit wird ein Regenwasserspeicher im Regenwasser- Revisionsschacht 5 gebildet, der ein hohes Volumen bei einfachem Zugang zum Regenwasserablaufrohr 9 gewährleistet. Die Herstellung erfolgt mittels des erfindungsgemäßen Montagesatzes 10, indem zunächst das Anschlussrohr 11 bzw. dessen Rohrabschnitt 11 a in das Regenwasserablaufrohr 9 eingesetzt und gegebenenfalls nachfolgend verspannt wird. Die Verschlusseinrichtung 14 wird angebracht, indem die beiden Schrauben 20a und 20b in die Anschlusskonsole 26 und die Ventilkugel 12 geschraubt werden, wobei ein der Schrauben 20a, 20b bereits vorab in das entsprechende Bauteil 26 oder 12 geschraubt sein kann und somit am Einbauort lediglich die andere Schraube einzudrehen ist.

Somit ist die Ventilkugel 12 eingesetzt. Der Schwimmer 17 liegt am Boden und schwimmt auf dem nachfolgend eintretenden Regenwasser jeweils selbständig an der Oberfläche.

Nachfolgend kann z.B. eine Tauchpumpe in den Innenraum 25, z. B. auf den Boden 7, gesetzt und an eine nach oben z. B. durch den Deckel 8 führende Wasserleitung angeschlossen werden. Grundsätzlich kann das Regenwasser jedoch auch aus dem Regenwasserrohr 3 entnommen werden, d.h. außerhalb des Revisionsschachtes 5, da es sich in dem Regenwasserrohr 3 bis zur maximalen Füllhöhe zurückstaut.

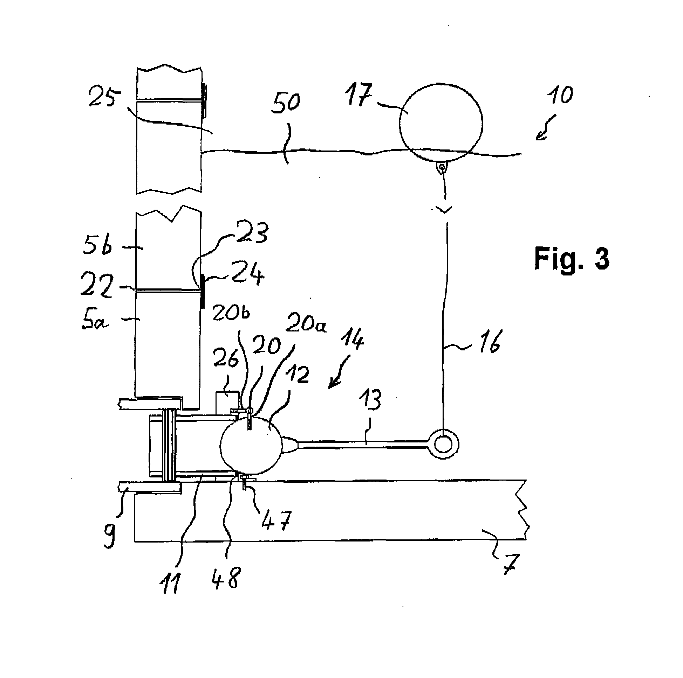

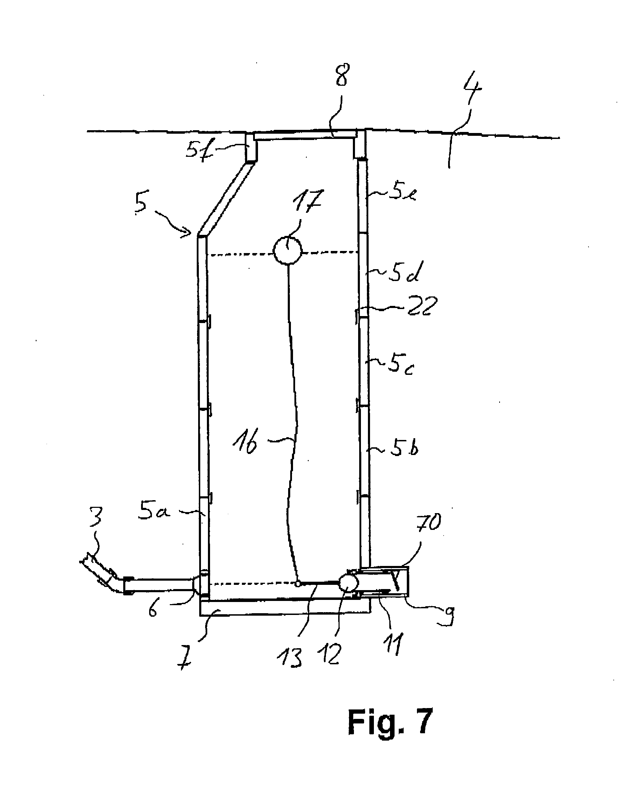

Sämtliche in Fig. 1 bis 6 gezeigte Ausführungsformen können gemäß Fig. 7 dahingehend erweitert werden, dass im Ablaufbereich eine Rückschlagklappe 70 vorgesehen wird, die bei Eindringen von Schmutzwasser aus dem öffentlichen Regenwasser-Kanalnetz 13 selbsttätig schließt. Gemäß Fig. 7 ist die Rückschlagklappe 70 z. B. am äußeren Ende des Anschlussrohrs 11 angebracht, insbesondere angelenkt, und öffnet nach außen, so dass sie bei einem Rückfluss aus dem Kanalnetz 13 selbsttätig verschließt. Somit ist bei dieser Ausführungsform lediglich die zusätzliche Rückschlagklappe 70 vorgesehen.

Gemäß einem weiteren Aspekt der Erfindung kann der Montagesatz auch zur Ausbildung eines Rückstausystems verwendet werden, das eine Hausentwässerung gegen das Eindringen von Schmutzwasser aus dem öffentlichen Kanalnetz 13 schützt. Hierbei wird - anders als in Fig. 1 bis 7 - der Ventilkörper als Anschlussrohr 11 in den Zulauf 6 des Revisionsschachtes 5 bzw. eine entsprechende Öffnung im Revisionsschacht 5 dichtend eingesetzt. Die Ventilkugel 12 ist wie in den vorherigen Ausführungsform der Fig. 1 bis 3 angelenkt und über den Ventilhebelarm 13 mit dem Seil 16 verbunden, das bei dieser Ausführungsform über mindestens eine, vorzugsweise zwei Rollen 74, 75 mit einem Endbereich verbunden ist, der den Schwimmer 17 und vorteilhafterweise ein Gewicht 76 aufweist. Das Gewicht 76 ist alleine oder zusammen mit dem Gewicht des Schwimmers 17 größer als das Gesamtgewicht der Ventilkugel 12 mit Ventilhebelarm 13, so dass im trockenen Zustand die Ventilkugel 12 nach oben in die Offenstellung gezogen ist, wobei bei Eindringen von Wasser 50 aus dem Auslass 9 der Schwimmer 17 Auftrieb erhält, der größer als die Gewichtskraft des Gewichts 76 ist, und somit das Seil 16 entspannt, so dass die Ventilkugel 12 mitsamt Ventilhebelarm 13 aufgrund ihres Gewichtes nach unten schwenken in die Schließstellung, in der die Ventilkugel 12 den Ventilkörper 11 verschließt.

Die Rollen 74, 75 sind vorteilhafterweise in dem Revisionsschacht 5 angebracht. Statt der Rollen 74, 75 kann z. B. auch eine Wippe oder ein Hebelsystem als Kopplungseinrichtung vorgesehen sein, dass bei steigendem Schwimmer 17 eine Entlastung der Ventilkugel 12 ermöglicht. Die Kopplungseinrichtung kann z. B. auch am Deckel 8 angebracht oder eingehängt werden.

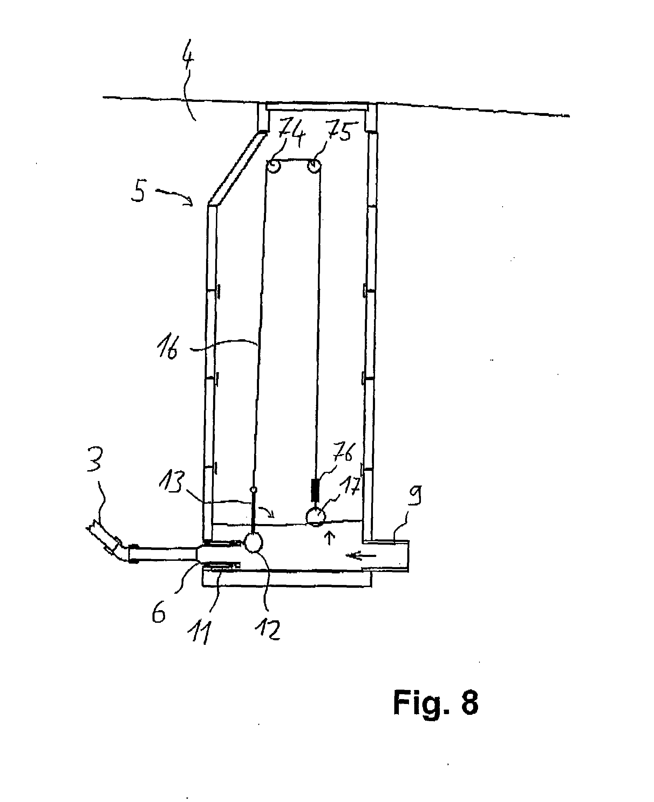

Bei der Ausführungsform der Fig. 8 kann der Revisionsschacht 5 ein Regenwasser- Revisionsschacht sein. Weiterhin ist aber erfindungsgemäß auch eine Ausbildung als Abwasser- Revisionsschacht möglich.

## Patentansprüche

1. Montagesatz,
wobei der Montagesatz (10) zum Einsatz in einem Revisionsschacht (5) vorgesehen ist und aufweist:
einen Ventilkörper (11) zum dichtenden Anschluss an einen Zuoder Ablauf (9, 6) des Revisionsschachtes (5),
einen Schwimmer (17), dessen Höhenposition in dem Revisionsschacht (5) von der Füllhöhe des Revisionsschachtes (5) abhängt,
eine schwenkbar aufgenommene Verschlusseinrichtung (14) mit einem Ventilelement (12) zur Anlage an einem Ventilsitz (48) des Ventilkörpers zum Verschließen des Zu- oder Ablaufs (9, 6) in einer Schließstellung und Freigeben in einer Offenstellung,
wobei das Eigengewicht der Verschlusseinrichtung (14) und der Wasserdruck des in dem Revisionsschacht (5) aufgenommenen Wassers (50) das Ventilelement (12) gegen den Ventilsitz (48) drücken,
wobei der Schwimmer (17) mit der Verschlusseinrichtung (14) gekoppelt ist zum Verstellen des Ventilelementes (12) in Abhängigkeit von der Füllhöhe des Wassers (50) in dem Revisionsschacht (5),
wobei die Verschlusseinrichtung (14) ergänzend durch einen Benutzer manuell zwischen der Schließstellung und der Offenstellung verstellbar ist.

2. Montagesatz nach Anspruch 1, **dadurch gekennzeichnet, dass** die Verschlusseinrichtung (14) mit dem Schwimmer (17) über ein Zugmittel (16) verbunden ist, dessen Übertragungslänge vorzugsweise einstellbar ist zur Einstellung der Füllhöhe, die für die Verstellung relevant ist.

3. Montagesatz nach Anspruch 2, **dadurch gekennzeichnet, dass** der Schwimmer (17) oder ein mit dem Schwimmer (17) verbundenes Greifmittel durch den Benutzer von der Oberseite her greifbar ist und die Verschlusseinrichtung (14) manuell über das Zugmittel (16) verstellbar ist.

4. Montagesatz nach Anspruch 2 oder 3, **dadurch gekennzeichnet, dass** das Zugmittel (16) an einem Ventilhebelarm (13) angebunden ist, der mit dem Ventilelement (12) starr verbunden ist.

5. Montagesatz nach einem der vorherigen Ansprüche, **dadurch gekennzeichnet, dass** die Verschlusseinrichtung (14) an einer Anbindungskonsole (26) angelenkt ist, die im Revisionsschacht (5) fixierbar ist.

6. Montagesatz nach Anspruch 5, **dadurch gekennzeichnet, dass** die Anbindungskonsole (26) mit dem Ventilkörper (11) zusammen als Baueinheit am Boden (7) des Revisionsschachtes (5) fixierbar ist, z. B. über mindestens eine Schraube (47).

7. Montagesatz nach Anspruch 5 oder 6, **dadurch gekennzeichnet, dass** ein Gelenk (20) zwischen der Verschlusseinrichtung (14) und der Anbindungskonsole (26) oberhalb des Ventilsitzes (48) angeordnet ist.

8. Montagesatz nach einem der vorherigen Ansprüche, **dadurch gekennzeichnet, dass** der Ventilkörper (11) zur Anbringung auf einem Boden (7) des Revisionsschachtes (5) vorgesehen ist.

9. Montagesatz nach einem der vorherigen Ansprüche, **dadurch gekennzeichnet, dass** der Ventilkörper (11) als in den Zu- oder Ablauf (6, 9) direkt einsetzbares Anschlussrohr ausgebildet ist,
wobei der Ventilsitz (48) vorzugsweise an einem äußeren Ende des Anschlussrohrs (11) ausgebildet ist.

10. Montagesatz nach einem der vorherigen Anschlüsse, **dadurch gekennzeichnet, dass** der Ventilkörper (11) direkt über eine Dichtungseinrichtung (29, 60), z.B. eine Verpressdichtung oder Mehrlippendichtung, in das Zu- oder Ablaufrohr (6, 9) einsetzbar ist.

11. Montagesatz nach Anspruch 10, **dadurch gekennzeichnet, dass** die Dichtung als eine Gummi-Pressdichtung (29) mit einem um das Anschlussrohr (11) gesetzten, ringförmigen Gummikörper (30) und den Gummikörper (30) in axialer Richtung umgebenden Pressringen (31, 32) zum axialen Verpressen des Gummikörpers (30) unter Ausbildung einer radialer Anpresswirkung ausgebildet ist.

12. Montagesatz nach Anspruch 10, **dadurch gekennzeichnet, dass** die Dichtung als um das Anschlussrohr (11, 11a) gesetzte, ringförmige Radialdichtung (60), vorzugsweise Lamellendichtung (60), mit radial vorstehenden Dichtelementen, vorzugsweise Dichtlamellen (62), ausgebildet ist.

13. Montagesatz nach einem der vorherigen Ansprüche, **dadurch gekennzeichnet, dass**
der Ventilkörper (11) zum Einsatz in ein Regenwasserablaufrohr (9) eines Regenwasser- Revisionsschachtes (5) vorgesehen ist,
wobei der Schwimmer (17) mit der Verschlusseinrichtung (14) gekoppelt ist zum Öffnen des Ventilelementes (12) in Abhängigkeit von der Füllhöhe des Wassers (50) in dem Revisionsschacht (5),
wobei das Eigengewicht der Verschlusseinrichtung (14) und der Wasserdruck des in dem Regenwasser- Revisionsschacht (5) aufgenommenen Wassers (50) das Ventilelement (12) gegen den Ventilsitz (48) drücken.

14. Montagesatz nach einem der Ansprüche 1 bis 12, **dadurch gekennzeichnet, dass** der Ventilkörper (11) zum Einsatz in ein Zulaufrohr (6) des Revisionsschachtes (5) vorgesehen ist, wobei der Schwimmer (17) mit der Verschlusseinrichtung (14) gekoppelt ist zum Schließen des Ventilelementes (12) in Abhängigkeit von der Füllhöhe des Wassers (50) in dem Revisionsschacht (5).

15. Montagesatz nach Anspruch 14, **dadurch gekennzeichnet, dass** er weiterhin eine Kopplungseinrichtung (74, 75), z. B. ein oder mehrere Rollen (74, 75) zum Umlenken einer von dem Schwimmer (17) ausgeübten Zugwirkung aufweist und der Schwimmer (17) bei Erreichen der Füllhöhe die Verschlusseinrichtung (14) über die Kopplungseinrichtung, vorzugsweise auch das Zugmittel (16) schließt.

16. Regenwasser-Speicher (28) mit einem Regenwasser- Revisionsschacht (5), der über einen Regenwasserzulauf (6) an ein Regenwasserrohr (3) angeschlossen ist und an ein zu einem Regenwasser-Kanalnetz führendes Regenwasserablaufrohr (9) angeschlossen ist, wobei ein Montagesatz nach einem der Ansprüche 1 bis 15 in dem Innenraum (25) des Regenwasser- Revisionsschachtes eingebaut ist.

17. Verfahren zum Herstellen eines Regenwasser-Speichers (28) in einem Regenwasser-Revisionsschacht (5), bei dem ein Montagesatz nach einem der Ansprüche 1 bis 15 eingesetzt wird, wobei der Ventilkörper (11) dichtend an das Regenwasserablaufrohr (9) angeschlossen wird.
